# FASCICULE DE BREVET EUROPEEN

(11) **EP 2 624 736 B1**
(45) Date de publication et mention de la délivrance du brevet: **13.08.2014**
(21) Numéro de dépôt: 11779764.7
(22) Date de dépôt: 29.09.2011
(51) Int. Cl.: A47J 43/25, B26D 7/00

(54) **DISPOSITIF DE RANGEMENT POUR OUTILS DE DÉCOUPE EMBOÎTABLES ET APPAREIL ÉLECTROMÉNAGER COMPORTANT UN TEL DISPOSITIF**
VORRICHTUNG ZUR LAGERUNG VON INEINANDER SCHACHTELBAREN SCHNEIDWERKZEUGEN UND ELEKTRISCHES HAUSHALTSGERÄT MIT EINER DERARTIGEN VORRICHTUNG
DEVICE FOR STORING NESTABLE CUTTING TOOLS, AND HOUSEHOLD ELECTRICAL APPLIANCE COMPRISING SUCH A DEVICE

(30) Priorité: 07.10.2010 FR 1058157
(43) Date de publication de la demande: 14.08.2013
(73) Titulaire: SEB S.A., 69130 Ecully (FR)
(72) Inventeur: ROUYER, Philippe, 65290 Juillan (FR); LAFOND, Jean-Marie, 65420 Ibos (FR); SUBERBIE, Nicolas, 65290 Juillan (FR)
(74) Mandataire: Thibault, Jean-Marc
(86) Numéro de dépôt international: PCT/FR2011/052281
(87) Numéro de publication internationale: WO 2012/045961

(56) Documents cités:
- EP-A1- 2 159 014
- US-A- 4 081 145

## Description

La présente invention concerne le domaine technique des appareils électroménagers de préparation culinaire comportant des outils de découpe présentant une forme géométrique autorisant leur emboîtement.

La présente invention concerne tout particulièrement un dispositif de rangement pour des outils de découpe présentant une forme tronconique.

Le document EP 2 159 014 divulgue un appareil électroménager de préparation culinaire comportant une base motrice renfermant un moteur électrique, un accessoire de travail comportant un magasin de montage d'outils de découpe présentant une géométrie autorisant leur emboîtement, ainsi qu'un capot de verrouillage des outils de découpe empilés les uns dans les autres dans le magasin, ledit capot comportant des moyens de blocage sur l'accessoire de travail. Ces dispositions permettent de ranger les outils de découpe sur l'appareil lorsque l'appareil n'est pas utilisé. Toutefois lors de l'utilisation de l'appareil avec l'un des outils de découpe, les outils de découpe non utilisés sont simplement posés dans le capot de verrouillage et peuvent être renversés d'un simple mouvement de la main.

Il serait donc intéressant, pour des raisons de praticité et de sécurité d'utilisation des outils de découpe et de l'appareil électroménager, de bénéficier d'un dispositif de rangement des outils emboités les uns dans les autres qui ne souffre pas les inconvénients de l'unique capot de verrouillage proposé dans EP 2 159 014.

Un objet de la présente invention est de satisfaire ce besoin et d'améliorer le rangement d'outils de découpe présentant une forme géométrique autorisant leur emboîtement.

Cet objet est atteint selon l'invention grâce à un dispositif de rangement d'outils de découpe emboîtables, comportant un capot apte à loger et recouvrir au moins partiellement au moins certains desdits outils de découpe emboîtés les uns dans les autres, le capot comportant des moyens de blocage sur un appareil électroménager de préparation culinaire. Ce dispositif est caractérisé en ce qu'il comporte une bague de maintien des outils de découpe emboîtés dans le capot, les moyens de blocage du capot étant aptes à venir en prise avec des moyens de blocage complémentaires de ladite bague qui comporte également au moins une butée de blocage desdits outils de découpe emboîtés par rapport à ladite bague et permettant le maintien desdits outils au moins partiellement à l'intérieur du capot.

Ainsi les outils de découpe non utilisés, qui sont conservés emboîtés les uns dans les autres et disposés dans le capot restent maintenus dans celui-ci par la bague de maintien en cas de basculement dudit capot.

Avantageusement selon l'invention, la bague de maintien comporte un corps annulaire sur la paroi externe duquel sont formés des dits moyens de blocage complémentaires des moyens de blocage du capot et sur la paroi interne duquel est formée au moins une butée de blocage des outils de découpe.

Avantageusement, les moyens de blocage du capot de verrouillage sur la bague de maintien sont choisis parmi l'une des catégories suivantes : moyens de blocage par encliquetage, moyens de blocage par vissage, moyens de blocage à baïonnettes.

Avantageusement encore selon l'invention, les moyens de blocage de la bague du dispositif de rangement de l'invention comportent au moins un bourrelet continu sur la paroi externe de la bague ou plusieurs sections saillantes réparties uniformément sur la paroi externe.

Selon une forme de réalisation particulière de l'invention, la bague du dispositif de rangement comporte également des organes de fixation sur un appareil électroménager de préparation culinaire. De tels organes de fixation permettent de fixer le dispositif de rangement sur un appareil électroménager avec lequel les outils de découpe sont utilisés, ce qui facilite le rangement de l'ensemble lorsque ce dernier n'est pas utilisé. En particulier, les organes de fixation de la bague peuvent être configurés pour permettre l'accrochage du dispositif de rangement sur un accessoire de travail de l'appareil électroménager tel qu'un magasin de montage des outils de découpe, de façon analogue au capot de verrouillage décrit dans EP 2 159 014.

Selon une forme de réalisation, le capot de verrouillage du dispositif de rangement est avantageusement conformé pour épouser les contours des outils de découpe emboîtés les uns dans les autres, lesdits outils présentant de préférence une taille identique.

Un second objet de l'invention concerne également la fourniture d'un appareil électroménager de préparation culinaire, comportant une base motrice formée d'un boîtier renfermant un moteur électrique et des moyens électriques de commande dudit moteur, un accessoire de travail solidaire de la base motrice et comportant un magasin de montage d'outils de découpe, un jeu de dits outils de découpe présentant une géométrie autorisant leur emboîtement les uns dans les autres ainsi que dans le magasin de l'accessoire de travail, des moyens d'accouplement et d'entraînement en rotation d'un outil de découpe monté dans le magasin de l'accessoire de travail et un capot de verrouillage desdits outils de découpe empilés les uns dans les autres dans le magasin de l'accessoire de travail. De façon inventive, cet appareil comporte également un dispositif de rangement d'outils de découpe emboîtables tel que précédemment présenté et formé au moins du capot de verrouillage associé à une bague de maintien des outils de découpe emboîtés les uns dans les autres.

Dans un mode de réalisation avantageux, la bague de maintien du dispositif de rangement comporte des moyens de fixation du dispositif de rangement sur l'appareil électroménager de préparation culinaire, en particulier sur l'accessoire de travail dudit appareil.

De tels moyens de fixation peuvent notamment être des crochets, des moyens de fixation par baïonnettes ou par vissage vis, ou bien encore par déformation élastique et encliquetage sur l'accessoire de travail par exemple.

Diverses autres caractéristiques ressortent de la description faite ci-dessous en référence aux dessins annexés qui montrent, à titre d'exemples non limitatifs, des formes de réalisation de l'objet de l'invention.

Sur les figures annexées :
- la figure **1** représente un appareil électroménager de préparation culinaire et un dispositif de rangement d'un jeu d'outils de découpe conformes à l'invention en vue de côté ;
- la figure **2** représente une vue en coupe longitudinale de la figure **1****,** limitée à la représentation de l'accessoire de travail de l'appareil électroménager coopérant avec le dispositif de rangement de l'invention et un jeu d'outils de découpe rangé dans ce dispositif ;
- la figure **3** est une vue éclatée en perspective de l'ensemble fonctionnel représenté à la figure **2** ;
- les figures **4A** à **4C** représentent sous différentes vues la bague de maintien du dispositif de rangement de l'invention dans un mode préféré de réalisation
- la figure **5** représente le dispositif de rangement de l'invention accommodant un jeu de cinq outils de découpe tronconique,
- la figure **6** représente sur une vue analogue à celle de la figure **2** une variante de réalisation de l'accessoire de travail de l'appareil électroménager de l'invention coopérant avec le dispositif de rangement de l'invention et un jeu d'outils de découpe rangé dans ce dispositif.

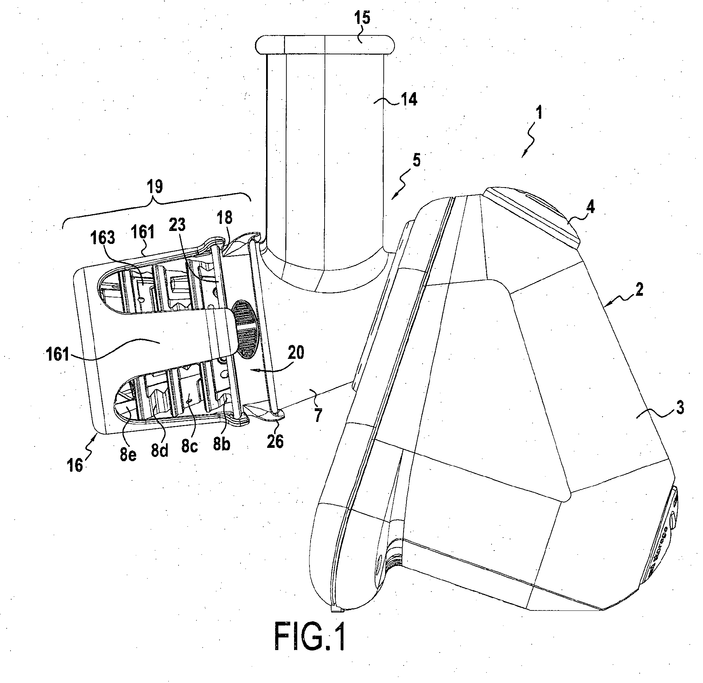

La figure **1** représente un appareil électroménager **1** conforme à la présente invention. Cet appareil électroménager **1** est formé d'une base motrice **2** comprenant un boîtier **3** renfermant un moteur électrique et des circuits électroniques de commande du moteur (non représentés) et reliés à des organes de commande tels que des interrupteurs **4** localisés sur le boîtier **3** pour permettre la mise en fonction et l'arrêt de l'appareil **1** par un utilisateur.

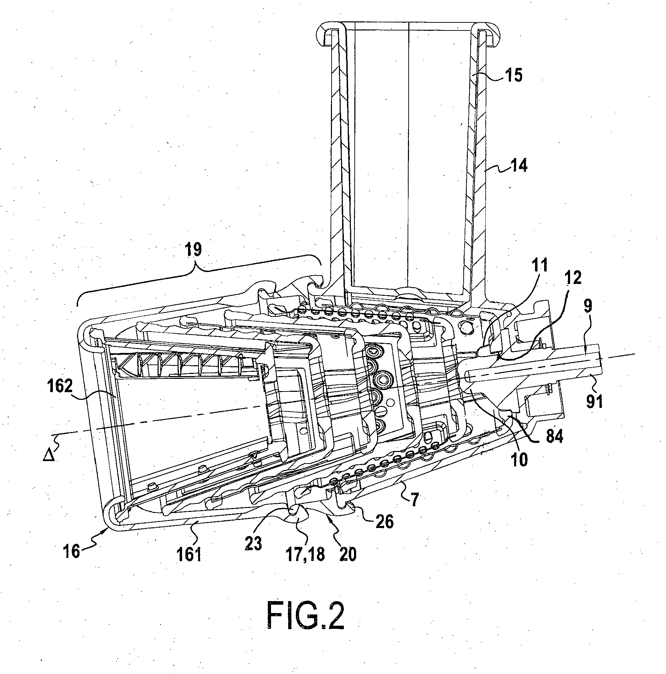

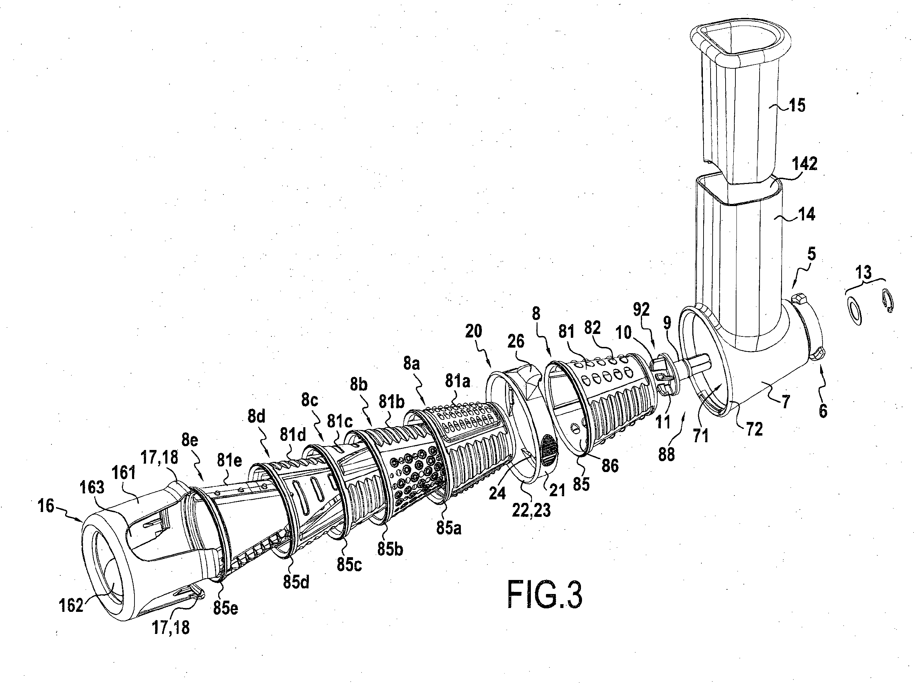

Sur le boîtier **3** est fixé un accessoire de découpe **5,** représenté en détail sur les figures **2** et **3****,** de préférence amovible du boîtier **3** et apte à être fixé sur celui-ci par une bague de fixation **6,** notamment à vis ou à baïonnettes. L'accessoire de découpe **5** comporte un magasin **7** délimitant un logement interne **71** de dimensions et formes adaptées pour recevoir et permettre le montage d'un outil de découpe **8** tronconique.

L'outil de découpe **8** comporte un corps **81** de forme tronconique présentant dans sa paroi tronconique des moyens de découpe **82.** Le corps **81** présente une première extrémité **83** comportant au moins un moyen d'accouplement et d'entraînement en rotation. Ce moyen d'accouplement et d'entraînement en rotation peut être comme cela ressort de la figure **2** un orifice d'entraînement femelle **12** formé dans une paroi de fond **84** de l'outil de découpe **8.** Une deuxième extrémité **85** du corps **81** est ouverte et forme une ouverture de sortie **86** pour les aliments découpés. Le corps **81** de l'outil de découpe **8** est avantageusement réalisé en matière plastique surmoulée sur les moyens de découpe **82** formés par une ou plusieurs tôles métalliques. A titre de variante, l'outil de découpe **8** peut être réalisé en métal embouti.

Comme cela ressort plus particulièrement des figures **2** et **3****,** un outil de découpe **8** tel que précédemment décrit est adapté pour être monté libre en rotation dans le magasin **7** de l'accessoire de découpe **5** et est apte à être entrainé par un axe d'entraînement **9.** Cet axe d'entraînement **9** coopère par une extrémité postérieure **91** avec le moteur électrique localisé dans la base motrice **2** et par une extrémité antérieure **92** avec l'outil de découpe **8.** L'accouplement entre l'outil de découpe **8** et l'axe d'entraînement **9** est réalisé de façon avantageuse par l'intermédiaire d'un organe d'accouplement mâle **10** portant des dents **11** adaptées pour engrener l'orifice d'accouplement femelle **12** agencé dans le fond **84** de l'outil **8.**

La coaxialité et le positionnement relatifs de l'axe d'entraînement **9** par rapport au magasin **7** et à l'outil de découpe **8** sont assurés par une rondelle de blocage **13** enfilée sur l'axe d'entraînement **9** par son extrémité postérieure **91** et venant buter contre le fond du magasin **7** recevant l'outil de découpe **8.**

L'accessoire de découpe **5** comporte également une cheminée **14** d'introduction des aliments à découper. La cheminée **14** est solidaire du magasin **7.** La cheminée **14** est formée par un tronçon tubulaire débouchant à ses deux extrémités qui forment respectivement un puits **141** de communication avec l'intérieur du magasin **7** et un orifice d'introduction **142** des aliments à découper dans la cheminée **14.** Cette cheminée **14** reçoit un poussoir **15** destiné à pousser les aliments à découper dans la cheminée **14** depuis l'orifice d'introduction **142** vers le puits **141** pour permettre la découpe des aliments par l'outil de découpe **8** entrainé en rotation par l'axe d'entraînement **9** et le moteur électrique à l'intérieur de la base motrice **2** de l'appareil **1** lorsque l'utilisateur actionne l'interrupteur de commande **4.**

Comme représenté sur les figures **1** à **3****,** l'appareil électroménager **1** de l'invention comporte un jeu d'outils de découpe **8, 8a, 8b, 8c, 8d, 8e.**

Les outils de découpe **8, 8a, 8b, 8c, 8d, 8e** comportent chacun des moyens de découpe **82, 82a, 82b, 82c, 82d, 82e** et un corps **81, 81a, 81b, 81c, 81d, 81e** de forme tronconique adaptée pour permettre le rangement par emboitement et empilement des outils **8, 8a, 8b, 8c, 8d, 8e** les uns dans les autres, ainsi que dans le logement **71** délimité par le magasin **7** de l'accessoire de découpe **5** de l'appareil. Ainsi les différents outils de découpe **8, 8a, 8b, 8c, 8d, 8e** présentent une géométrie autorisant leur emboitement les uns dans les autres pour former un empilement d'outils. Dans le mode de réalisation illustré et de manière préférée, les outils de découpe **8, 8a, 8b, 8c, 8d, 8e** présentent une taille identique.

Le rangement des outils de découpe 8, **8a, 8b, 8c, 8d, 8e** en dehors des phases d'utilisation de l'appareil électroménager **1** peut ainsi s'effectuer, comme décrit dans EP 2 159 014, par emboîtement desdits outils **8, 8a, 8b, 8c, 8d, 8e** les uns dans les autres dans le magasin **7** selon un axe d'empilement Δ qui est également l'axe de rotation de l'axe d'entraînement **9** en rotation d'un outil **8** pour réaliser la découpe d'aliments. Une fois emboîtés les uns dans les autres, les outils **8, 8a, 8b, 8c, 8d, 8e** sont ensuite maintenus en position à l'aide d'un capot de verrouillage **16** qui comporte des moyens de blocage **17** sur l'accessoire de découpe **5,** et plus particulièrement de préférence sur une bordure antérieure **72** du magasin **7** de celui-ci.

Le capot de verrouillage **16** est conformé pour épouser les contours des outils de découpe **8, 8a, 8b, 8c, 8d, 8e** empilés les uns dans les autres.

Le capot de verrouillage **16** présente une forme adéquate pour empêcher tout glissement ou mouvement des outils de découpe **8, 8a, 8b, 8c, 8d, 8e** les uns par rapport aux autres une fois bloqué par ses moyens de blocage **17** sur l'accessoire **5.**

Comme représenté notamment sur les figures **1** à **3****,** les moyens de blocage **17** du capot de verrouillage **16** peuvent notamment être formés, de la façon la plus simple, par des crochets **18** adaptés pour réaliser un blocage du capot **16** par encliquetage ou accrochage sur la bordure antérieure circulaire **72** du magasin **7** de l'accessoire **5.** De tels crochets **18** peuvent être formés, comme représenté sur les figures, au bout de pattes **161** du capot de verrouillage **16,** solidaires d'un plateau d'appui **162** s'engageant dans l'outil de découpe **8e** d'extrémité de l'empilement d'outils dans le magasin **7.** Mais bien entendu, d'autres types de moyens de blocage **17** peuvent bien sûr être envisagés sans sortir du cadre de la présente invention, notamment des moyens de blocage par vis ou des moyens de blocage par baïonnettes. Tel que montré sur la figure **1**, les pattes **161** ménagent des ouvertures **163** laissant apparaître une partie des outils de découpe **8, 8a, 8b, 8c, 8d, 8e** logés dans le capot de verrouillage **16** en place sur l'accessoire de travail **5**. Les pattes **161** permettent également de faciliter la mise en place et le retrait du capot de verrouillage **16.** Les pattes **161** sont prévues pour venir en prise avec la bordure antérieure **72** du magasin **7**.

Le capot de verrouillage **16** peut être réalisé par moulage de matière plastique bien que cette forme de réalisation ne soit pas limitative.

Le capot de verrouillage **16** permet ainsi de maintenir les outils de découpe **8, 8a, 8b, 8c, 8d, 8e** en position emboîtée de rangement dans le magasin **7** de l'appareil électroménager **1** lorsque celui-ci n'est pas usité.

En revanche, lors de l'utilisation de l'appareil électroménager **1,** un des six outils de découpe **8, 8a, 8b, 8c, 8d, 8e** est utilisé et monté dans le magasin **7** de l'accessoire de travail **5,** et les cinq outils de découpe restants ainsi que le capot de verrouillage **16** doivent être posés librement à côté de l'appareil électroménager **1,** ou bien empilés les uns dans les autres dans le capot de verrouillage **16** retourné par exemple, avec le risque d'être renversés par mégarde.

Pour palier à ce problème de rangement des outils de découpe **8, 8a, 8b, 8c, 8d, 8e** pendant les phases d'utilisation de l'appareil électroménager **1** ou encore pour faciliter un rangement alternatif des outils de découpe **8, 8a, 8b, 8c, 8d, 8e** indépendamment de l'appareil électroménager **1,** la présente invention propose un dispositif de rangement **19** d'un jeu d'outils de découpe **8, 8a, 8b, 8c, 8d, 8e** comportant le capot de verrouillage **16** et une bague de maintien **20** apte à coopérer avec le capot de verrouillage **16** et à être liée à celui-ci comme par exemple représenté sur les figures **1** et **2****.**

Dans l'exemple représenté, le dispositif de rangement **19** est prévu pour loger cinq outils de découpe **8, 8a, 8b, 8c, 8d, 8e** pendant qu'un sixième outil de découpe est monté dans le magasin **7** de l'appareil électroménager **1.**

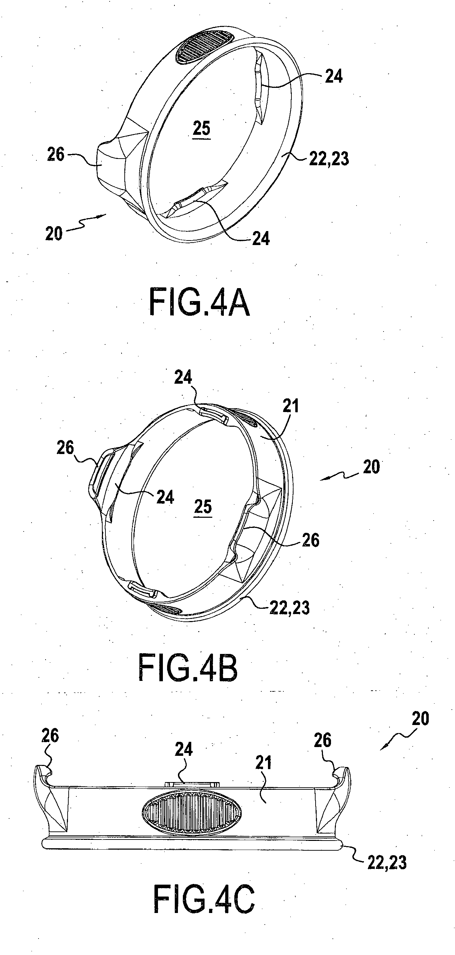

La bague de maintien **20** est représentée sous différentes vues aux figures **4A** à **4C****.** Elle se compose d'un corps **21** annulaire, comportant sur sa paroi annulaire externe, au niveau d'un bord périphérique **22,** un moyen de blocage complémentaire des moyens de blocage **17** en forme de crochets **18** du capot de verrouillage **16** en la forme d'une lèvre ou bordure **23** protubérante et de préférence sensiblement identique à la bordure antérieure **72** du magasin **7** de l'accessoire de travail **5** de l'appareil électroménager **1** de manière à permettre la fixation et le blocage du capot de verrouillage **16** par ses crochets **18** sur la bordure **23** de la bague **20.**

Dans l'exemple représenté, la bordure **23** est une bordure continue sur toute la périphérie du corps annulaire **21** de la bague **20.** Toutefois, cette bordure peut également être discontinue (non représenté), notamment sous la forme de sections protubérantes formées à intervalles réguliers (non représenté) sur la périphérie du corps annulaire **21** de la bague, de manière là encore à permettre la fixation et le blocage du capot de verrouillage **16** par ses crochets **18, soit** par déformation élastique et encliquetage sur la bordure, soit par effet de blocage en rotation du capot de verrouillage **16** sur la bordure **23** de la bague **20.**

Bien entendu, il est possible de réaliser les moyens de blocage complémentaires **17, 23** du capot de verrouillage **16** et de la bague de maintien **20** sous une forme alternative telle que par exemple sous la forme de moyens de blocage par vissage ou encore à baïonnettes. Néanmoins de tels moyens sont plus complexes et donc plus coûteux à réaliser.

La bague **20** constitue avantageusement un collier de maintien des outils de découpe **8, 8a, 8b, 8c, 8d, 8e** dans le capot de verrouillage **16** pour former le dispositif de rangement **19** des outils de découpe **8, 8a, 8b, 8c, 8d, 8e.** Pour ce faire elle comporte également sur la paroi interne du corps annulaire **21** au moins une, et de préférence au moins deux, butées **24** formant saillies radialement à la paroi interne du corps annulaire **21** de manière à réduire localement le diamètre de la lumière centrale **25** ménagée au centre du corps annulaire **21** de la bague **20** et prévue pour permettre le passage partiel du corps **81, 81a, 81b, 81c, 81d, 81e** d'un outil de découpe **8, 8a, 8b, 8c, 8d, 8e** tout en bloquant le passage complet dudit outil de découpe **8, 8a, 8b, 8c, 8d, 8e** au niveau de sa seconde extrémité **85, 85a, 85b, 85c, 85d, 85e** la plus large.

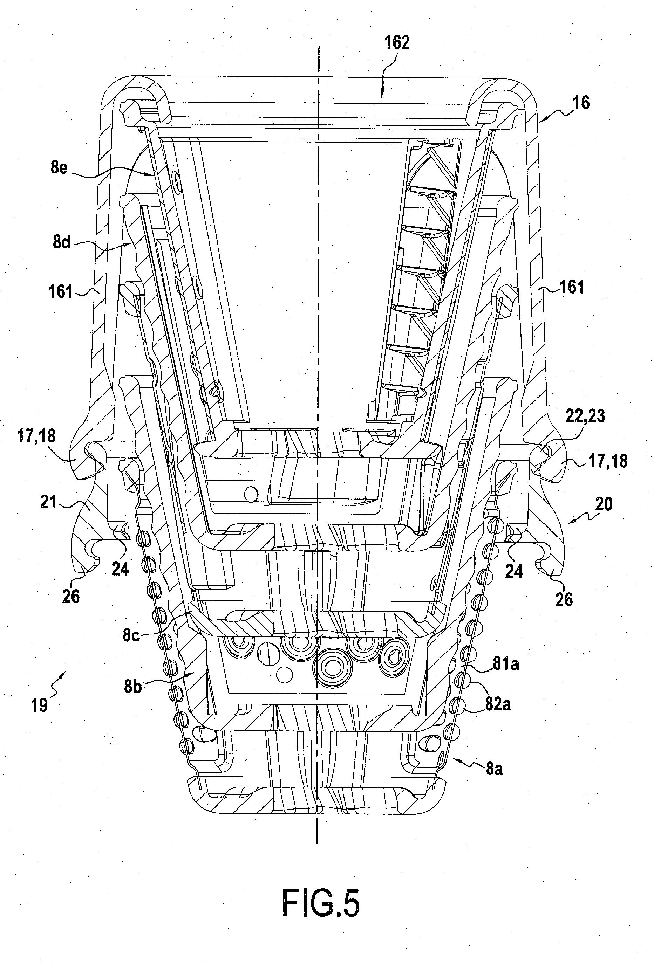

Ainsi, pour ranger un jeu de cinq outils de découpes **8a, 8b, 8c, 8d, 8e** dans le dispositif de rangement **19,** il suffit dans un premier temps, comme représenté à la figure **5****,** d'emboîter les outils de découpe **8a, 8b, 8c, 8d, 8e** les uns dans les autres dans le capot de verrouillage **16** puis de passer la bague **20** par sa lumière centrale **25** sur la pile d'outils'de découpe **8a, 8b, 8c, 8d, 8e** constituée et de pousser ensuite celle-ci jusqu'à encliqueter sa bordure périphérique **23** protubérante dans les crochets **18** des pattes **161** du capot de verrouillage **16.** Une fois la bague **20** et le capot de verrouillage **16** liés l'un à l'autre par leurs moyens de fixation complémentaires, les butées **24** de la bague **20** appuyent alors contre la seconde extrémité **85** du dernier outil de découpe **8** de la pile, maintenant ainsi les outils de découpe entre le capot de verrouillage **16** et la bague **20** et permettant leur rangement et déplacement de façon unitaire et homogène. Le dispositif de rangement **19** contenant le jeu d'outils de découpe **8a**, **8b, 8c, 8d, 8e** peut ainsi être rangé aisément dans un tiroir ou un placard sans risque que les outils ne se séparent les uns des autres.

Par ailleurs, le dispositif de rangement **19** proposé par l'invention permet également une fixation sur l'appareil électroménager **1,** notamment de préférence au niveau du rebord **72** du magasin **7** de l'accessoire de travail **5.** Pour cela, la bague **20** comporte avantageusement sur la paroi externe de son corps annulaire **21** au moins deux crochets **26** analogues aux crochets **18** du capot de verrouillage **16** et qui permettent un encliquetage du dispositif de rangement **19** sur le rebord **72** de l'accessoire de travail **5** come représenté aux figures **1** et **2****.**

Bien entendu, lés crochets de fixation **25** pourraient être remplacés par tous moyens analogues de fixation sur l'appareil électroménager **1,** que ce soit par vissage ou par baïonnettes par exemple.

On peut ainsi solidariser aisément le dispositif de rangement **19** sur l'appareil électroménager **1** ce qui octroie également la possibilité de ranger les outils de découpe **8, 8a, 8b, 8c, 8d, 8e** directement sur l'appareil électroménager comme avec le capot de verrouillage **16** seul.

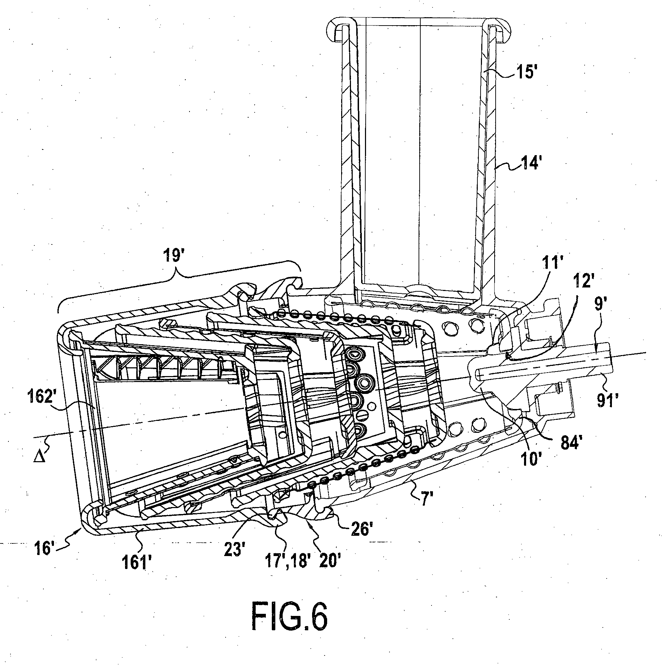

La figure **6** présente une légère variante de réalisation de l'appareil électroménager dans lequel le magasin **7'** est plus allongé que le magasin **7** de l'appareil des figures **1** à **5** et se prolonge en pratique au-delà de l'extrémité de l'outil rotatif monté dans le magasin **7'** pour mieux canaliser l'éjection des aliments découpés.

Dans cette forme de réalisation, le reste de l'appareil est identique à celui décrit aux figures **1** à **5****,** et notamment à la figure **2** ; sur la figure **6****,** les références numériques sont identiques à celles de la figure **2** et complétées d'un caractère prime. Ainsi, l'appareil est équipé d'une bague **20'** identique à la bague **20** et peut être montée sur l'extrémité du magasin **7'** qu lui a été allongé par rapport au magasin **7** de la figure **2****.** De plus, le capot **16'** est de préférence un peu plus court que le capot **16.** Toutefois la bague **20'** assemblée avec le capot **16'** permet de retenir cinq outils rotatifs comme dans le cas de la figure **2****.**

A titre de variante encore, le capot **16, 16'** de rangement des outils **8, 8a,** 8b, **8c, 8d, 8e** comportant des moyens de blocage **17, 17'** sur l'appareil électroménager **1** n'est pas nécessairement monté sur le magasin **7, 7'.**

Le mode de rangement d'outils tronconiques proposé par l'invention n'augmente pas de façon notable l'encombrement général de l'appareil électroménager **1,** qui peut toujours être facilement stocké dans un placard par exemple. Le rangement des outils de découpe **8, 8a, 8b, 8c, 8d, 8e** est réalisé de façon économique et simple à l'aide du dispositif de rangement **19, 19'** de l'invention et qui s'intègre très facilement à l'appareil lui-même ou peut être séparé de celui-ci pour un rangement à part des outils de découpe **8, 8a, 8b, 8c, 8d, 8e.** Ainsi il est possible pour l'utilisateur d'avoir toujours les outils de découpe **8, 8a, 8b, 8c, 8d, 8e** à disposition.

L'utilisation de l'appareil électroménager **1** de l'invention et son rangement sont particulièrement intuitives. Lorsque l'on veut préparer un plat à base de légumes râpés ou émincés par exemple, il suffit de sortir l'appareil **1** de sa zone de rangement et de poser sa base motrice **2** sur un plan de travail stable. On choisit ensuite l'outil de découpe **8, 8a, 8b, 8c, 8d, 8e** le mieux adapté à la préparation que l'on souhaite réaliser. Une fois le bon outil **8** choisi, on monte celui directement dans le magasin **7, 7'** en veillant à bien accoupler ledit outil **8** par son orifice d'accouplement avec l'organe d'accouplement mâle de l'axe menant **9, 9'** lié au moteur dans la base motrice **2.** Il suffit ensuite de brancher l'appareil **1** au secteur électrique par une prise idoine, puis d'introduire les aliments à découper dans la cheminée **14, 14'** et de mettre l'appareil en marche en appuyant sur l'interrupteur **4.** L'outil **8** monté dans le magasin **7, 7'** entre alors en rotation sous l'action de l'axe menant **9, 9'** et du moteur et les aliments dans la cheminée **14, 14',** poussés le cas échéant par l'utilisateur à l'aide du poussoir **15, 15'** sont râpés et/ou émincés par l'outil **8** et déversés par l'orifice d'extrémité antérieur **83** de celui-ci dans un plat ou une assiette.

Une fois les aliments préparés, il convient d'arrêter l'appareil **1,** de le débrancher puis de démonter l'outil **8** de l'intérieur du magasin **7, 7'** pour le nettoyer, et de nettoyer également le cas échéant l'accessoire **5** si celui-ci est démontable. Lorsque ces éléments ont été nettoyés, il suffit alors de ranger à nouveau le jeu d'outils **8, 8a, 8b, 8c, 8d, 8e** dans le dispositif de rangement **19, 19'** en les empilant les uns dans les autres puis de maintenir cet empilement d'outils par l'intermédiaire de la bague de maintien **20, 20'** que l'on vient coiffer sur l'empilement d'outils 8, **8a, 8b, 8c, 8d, 8e** et clipper par les crochets **18, 18'** du capot de verrouillage **16, 16'** sur la bordure **23, 23'** de la bague de maintien **20, 20'.** On range ensuite le dispositif de rangement **19, 19'** dans un placard ou un tiroir ou on le fixe sur le rebord **72** du magasin **7** de l'accessoire de travail **5** de l'appareil électroménager 1.

Dans l'exemple particulier représenté et de façon préférée, les outils de découpe **8, 8a, 8b, 8c, 8d, 8e** sont tronconiques ce qui procure facilité et compacité d'empilement et bonne efficacité de la coupe des aliments. Toutefois, il convient de noter que la compacité de l'empilage dépend à la fois de la pente du cône et de l'épaisseur de la paroi de l'outil.

Les avantages de la solution de rangement d'outils proposée par l'invention sont les suivants :
- les outils sont rangés tous ensemble de manière compacte et sécurisée sans procuration d'enceinte ou d'espace de rangement additionnel dans l'appareil électroménager ;
- l'encombrement de l'empilement d'outil est minimal ;
- le rangement se fait sur une partie accessible et visible de l'appareil, ce qui permet d'avoir toujours les outils sous la main ;
- enfin cette solution de rangement est simple et de coût extrêmement réduit.

## Revendications

1. Dispositif **(19, 19')** de rangement d'outils de découpe **(8, 8a, 8b, 8c, 8d, 8e)** emboîtables, comportant un capot **(16, 16')** apte à loger et recouvrir au moins partiellement au moins certains desdits outils de découpe **(8, 8a, 8b, 8c, 8d, 8e)** emboîtés les uns dans les autres, le capot **(16, 16')** comportant des moyens de blocage **(17, 17')** sur un appareil électroménager **(1)** de préparation culinaire, **caractérisé en ce qu'**il comporte une bague de maintien **(20, 20')** des outils de découpe **(8, 8a, 8b, 8c, 8d, 8e)** emboîtés dans le capot **(16, 16'),** les moyens de blocage **(17, 17')** du capot **(16, 16')** étant aptes à venir en prise avec des moyens de blocage **(23, 23')** complémentaires de ladite bague de maintien **(20, 20')** qui comporte également au moins une butée **(24, 24')** de blocage desdits outils de découpe **(8, 8a, 8b, 8c, 8d, 8e)** emboîtés par rapport à ladite bague et permettant le maintien desdits outils au moins partiellement à l'intérieur du capot.

2. Dispositif **(19, 19')** de rangement selon la revendication 1, **caractérisé en ce que** la bague de maintien **(20, 20')** comporte un corps annulaire **(21)** sur la paroi externe duquel sont formés des dits moyens de blocage **(23, 23')** complémentaires des moyens de blocage **(17, 17')** du capot **(16, 16')** et sur la paroi interne duquel est formée au moins une butée de blocage **(24)** des outils de découpe.

3. Dispositif **(19)** de rangement selon la revendication 1 ou 2, **caractérisé en ce que** les moyens de blocage **(17, 17')** du capot **(16, 16')** sur la bague de maintien **(20, 20')** sont choisis par l'une des catégories suivantes : moyens de blocage par encliquetage, moyens de blocage par vissage, moyens de blocage à baïonnettes.

4. Dispositif de rangement selon l'une des revendications 1 à 3, **caractérisé en ce que** les moyens de blocage de la bague de maintien **(20, 20')** du dispositif de rangement de l'invention comportent au moins un bourrelet **(23, 23')** continu formant saillie sur la paroi externe de la bague de maintien **(20, 20')** ou plusieurs sections saillantes réparties uniformément sur la paroi externe.

5. Dispositif de rangement selon l'une des revendications 1 à 4, **caractérisé en ce que** ladite bague de maintien **(20, 20')** du dispositif de rangement comporte également des organes de fixation **(26, 26')** sur un appareil électroménager **(1)** de préparation culinaire.

6. Dispositif **(19, 19'))** de rangement selon l'une des revendications 1 à 5, **caractérisé en ce que** le capot **(16, 16')** est conformé pour épouser les contours des outils de découpe **(8, 8a, 8b, 8c, 8d, 8e)** empilés les uns dans les autres.

7. Dispositif **(19, 19'**)) de rangement selon l'une des revendications 1 à 6, **caractérisé en ce que** les outils de découpe **(8, 8a, 8b, 8c, 8d, 8e)** présentent une taille identique.

8. Dispositif de rangement selon l'une des revendications 1 à 7, **caractérisé en ce que** le capot **(16)** présente au moins une ouverture **(163)** laissant apparaître une partie des outils de découpe **(8, 8a, 8b, 8c, 8d,** 8e) logés dans le capot de verrouillage **(16)** en place sur l'accessoire de travail **(5).**

9. Appareil électroménager **(1)** de préparation culinaire, comportant une base motrice **(2)** formée d'un boîtier **(3)** renfermant un moteur électrique et des moyens électriques **(4)** de commande dudit moteur, un accessoire de travail **(5)** solidaire de la base motrice et comportant un magasin **(7, 7')** de montage d'outils de découpe **(8, 8a, 8b, 8c, 8d, 8e),** un jeu de dits outils de découpe **(8, 8a, 8b, 8c, 8d, 8e)** présentant une géométrie autorisant leur emboîtement les uns dans les autres et leur empilement dans le magasin **(7, 7')** de l'accessoire de travail, des moyens d'accouplement et d'entraînement en rotation d'un desdits outils de découpe monté dans le magasin de l'accessoire de travail, un capot de verrouillage **(16, 16')** desdits outils de découpe empilés les uns dans les autres dans le magasin de l'accessoire de travail, **caractérisé en ce qu'**il comporte également un dispositif de rangement **(19, 19')** d'outils de découpe emboîtables selon la revendication 1, ledit dispositif de rangement comportant le capot de verrouillage **(16, 16')** associé à une bague de maintien **(20, 20')** des outils de découpe emboîtés les uns dans les autres.

10. Appareil électroménager selon la revendication 9, **caractérisé en ce que** la bague de maintien **(20, 20')** du dispositif de rangement **(19, 19')** comporte des moyens de fixation **(26, 26')** du dispositif de rangement sur l'appareil électroménager de préparation culinaire, en particulier sur l'accessoire de travail **(5)** dudit appareil.

11. Appareil électroménager **(1)** de préparation culinaire, comportant une base motrice **(2)** formée d'un boîtier **(3)** renfermant un moteur électrique et des moyens électriques **(4)** de commande dudit moteur, un accessoire de travail **(5)** solidaire de la base motrice et comportant un magasin **(7, 7')** de montage d'outils de découpe **(8, 8a, 8b, 8c, 8d, 8e),** un jeu de dits outils de découpe **(8, 8a, 8b, 8c, 8d, 8e)** présentant une géométrie autorisant leur emboîtement les uns dans les autres et leur empilement dans le magasin **(7, 7')** de l'accessoire de travail, des moyens d'accouplement et d'entraînement en rotation d'un desdits outils de découpe monté dans le magasin de l'accessoire de travail, un capot de verrouillage **(16, 16')** desdits outils de découpe empilés les uns dans les autres, **caractérisé en ce qu'**il comporte également un dispositif de rangement **(19, 19')** d'outils de découpe emboîtables selon la revendication 1, ledit dispositif de rangement comportant le capot de verrouillage **(16, 16')** associé à une bague de maintien **(20, 20')** des outils de découpe emboîtés les uns dans les autres.

12. Appareil électroménager selon l'une des revendications 9 à 11, **caractérisé en ce que** les moyens de blocage **(17, 17')** du capot de verrouillage **(16, 16')** sur l'accessoire de travail **(5)** et/ou sur la bague de maintien **(20, 20')** sont choisis parmi l'une des catégories suivantes : moyens de fixation par encliquetage, moyens de fixation par vissage, moyens de fixation à baïonnettes.

13. Appareil électroménager selon l'une des revendications 9 à 12, **caractérisé en ce que** les outils de découpe **(8, 8a, 8b, 8c, 8d, 8e)** présentent un corps **(81)** de forme tronconique et **en ce que** le magasin **(7)** de l'accessoire de travail **(5)** définit un logement **(71)** de réception et de montage de forme complémentaire à celle desdits outils de découpe **(8, 8a, 8b, 8c, 8d, 8e).**

14. Appareil électroménager selon l'une des revendications 9 à 13, **caractérisé en ce que** l'accessoire de travail **(5)** est amovible de la base motrice **(2),** ladite base motrice **(2)** et ledit accessoire de travail **(5)** comportant chacun des moyens de fixations complémentaires l'un à l'autre.

15. Appareil électroménager selon l'une des revendications 9 à 14, **caractérisé en ce que** le capot de verrouillage **(16)** présente des pattes **(161)** prévues pour venir en prise avec une bordure antérieure **(72)** du magasin **(7)** et/ou des moyens de blocage **(23)** sur la paroi extérieure de la bague de maintien **(20).**

## Patentansprüche

1. Vorrichtung (19, 19') zur Lagerung von ineinander schachtelbaren Schneidwerkzeugen (8, 8a, 8b, 8c, 8d, 8e), umfassend eine Kappe (16, 16'), die geeignet ist, zumindest teilweise zumindest gewisse der Schneidwerkzeuge (8, 8a, 8b, 8c, 8d, 8e), die ineinander geschachtelt sind, aufzubewahren, wobei die Kappe (16, 16') Mittel (17, 17') zur Befestigung auf einem elektrischen Haushaltsgerät (1) zur Zubereitung von Speisen umfasst, **dadurch gekennzeichnet, dass** sie einen Haltering (20, 20') für die ineinander geschachtelten Schneidwerkzeuge (8, 8a, 8b, 8c, 8d, 8e) in der Kappe (16, 16') umfasst, wobei die Mittel (17, 17') zur Befestigung der Kappe (16, 16') geeignet sind, mit komplementären Befestigungsmitteln (23, 23') des Halteringes (20, 20') in Eingriff zu gelangen, welcher auch mindestens einen Anschlag (24, 24') zur Befestigung der ineinander geschachtelten Schneidwerkzeuge (8, 8a, 8b, 8c, 8d, 8e) in Bezug zum Ring umfasst, der den Halt der Werkzeuge zumindest teilweise im Inneren der Kappe ermöglicht.

2. Lagerungsvorrichtung (19, 19') nach Anspruch 1, **dadurch gekennzeichnet, dass** der Haltering (20, 20') einen ringförmigen Körper (21) umfasst, an dessen Außenwand zu den Befestigungsmitteln (17, 17') der Kappe (16, 16')komplementäre Befestigungsmittel (23, 23') ausgebildet sind, und an dessen Innenwand mindestens ein Befestigungsanschlag (24) für die Schneidwerkzeuge ausgebildet ist.

3. Lagerungsvorrichtung (19) nach Anspruch 1 oder 2, **dadurch gekennzeichnet, dass** die Befestigungsmittel (17, 17') der Kappe (16, 16') auf dem Haltering (20, 20') aus einer der folgenden Kategorien ausgewählt sind: Befestigungsmitte durch Einrasten, Befestigungsmittel durch Verschrauben, Befestigungsmittel mit Bajonettverschluss.

4. Lagerungsvorrichtung nach einem der Ansprüche 1 bis 3, **dadurch gekennzeichnet, dass** die Befestigungsmittel des Halteringes (20, 20') der erfindungsgemäßen Lagerungsvorrichtung mindestens einen durchgehenden Wulst (23, 23') umfassen, der an der Außenwand des Halteringes (20, 20') vorspringt, oder mehrere vorspringende Abschnitte, die gleichmäßig an der Außenwand verteilt sind.

5. Lagerungsvorrichtung nach einem der Ansprüche 1 bis 4, **dadurch gekennzeichnet, dass** der Haltering (20, 20') der Lagerungsvorrichtung auch Elemente (26, 26') zur Befestigung auf einem elektrischen Haushaltsgerät (1) zur Zubereitung von Speisen umfasst.

6. Lagerungsvorrichtung (19, 19') nach einem der Ansprüche 1 bis 5, **dadurch gekennzeichnet, dass** die Kappe (16, 16') derart ausgeführt ist, dass sie sich an die Konturen der ineinander geschachtelten Schneidwerkzeuge (8, 8a, 8b, 8c, 8d, 8e) anpasst.

7. Lagerungsvorrichtung (19, 19') nach einem der Ansprüche 1 bis 6, **dadurch gekennzeichnet, dass** die Schneidwerkzeuge (8, 8a, 8b, 8c, 8d, 8e) identische Größe haben.

8. Lagerungsvorrichtung nach einem der Ansprüche 1 bis 7, **dadurch gekennzeichnet, dass** die Kappe (16) mindestens eine Öffnung (163) aufweist, die einen Teil der Schneidwerkzeuge (8, 8a, 8b, 8c, 8d, 8e), die in der Verriegelungskappe (16) auf dem Arbeitszubehör (5) angeordnet gelagert sind, erscheinen lässt.

9. Elektrisches Haushaltsgerät (1) zur Zubereitung von Speisen, umfassend eine Antriebsbasis (2), die von einem Gehäuse (3) gebildet ist, umfassend einen Elektromotor und elektrische Mittel (4) zur Steuerung des Motors, ein Arbeitszubehör (5), das mit der Antriebsbasis verbunden ist und umfassend ein Lager (7, 7') für die Montage von Schneidwerkzeugen (8, 8a, 8b, 8c, 8d, 8e), einen Satz der Schneidwerkzeuge (8, 8a, 8b, 8c, 8d, 8e), der eine Geometrie aufweist, die ihr Ineinanderschachteln und Stapeln in dem Lager (7, 7') des Arbeitszubehörs gestattet, Mittel zur Kupplung und für den Drehantrieb eines der Schneidwerkzeuge, das in dem Lager des Arbeitszubehörs montiert ist, eine Verriegelungskappe (16, 16') für die ineinander gestapelten Schneidwerkzeuge in dem Lager des Arbeitszubehörs, **dadurch gekennzeichnet, dass** es auch eine Lagerungsvorrichtung (19, 19') für ineinander schachtelbare Schneidwerkzeuge nach Anspruch 1 umfasst, wobei die Lagerungsvorrichtung die Verriegelungskappe (16, 16') umfasst, die mit einem Haltering (20, 20') der ineinander geschachtelten Schneidwerkzeuge verbunden ist.

10. Elektrisches Haushaltsgerät nach Anspruch 9, **dadurch gekennzeichnet, dass** der Haltering (20, 20') der Lagerungsvorrichtung (19, 19') Mittel (26, 26') zur Befestigung der Lagerungsvorrichtung auf einem elektrischen Haushaltsgerät zur Zubereitung von Speisen, insbesondere auf dem Arbeitszubehör (5) des Geräts, umfasst.

11. Elektrisches Haushaltsgerät (1) zur Zubereitung von Speisen, umfassend eine Antriebsbasis (2), die von einem Gehäuse (3) gebildet ist, umfassend einen Elektromotor und elektrische Mittel (4) zur Steuerung des Motors, ein Arbeitszubehör (5), das mit der Antriebsbasis verbunden ist und umfassend ein Lager (7, 7') für die Montage von Schneidwerkzeugen (8, 8a, 8b, 8c, 8d, 8e), einen Satz der Schneidwerkzeuge (8, 8a, 8b, 8c, 8d, 8e), der eine Geometrie aufweist, die ihr Ineinanderschachteln und Stapeln in dem Lager (7, 7') des Arbeitszubehörs gestattet, Mittel zur Kupplung und für den Drehantrieb eines der Schneidwerkzeuge, das in dem Lager des Arbeitszubehörs montiert ist, eine Verriegelungskappe (16, 16') für die ineinander gestapelten Schneidwerkzeuge in dem Lager, **dadurch gekennzeichnet, dass** es auch eine Lagerungsvorrichtung (19, 19') für ineinander schachtelbare Schneidwerkzeuge nach Anspruch 1 umfasst, wobei die Lagerungsvorrichtung die Verriegelungskappe (16, 16') umfasst, die mit einem Haltering (20, 20') der ineinander geschachtelten Schneidwerkzeuge verbunden ist.

12. Elektrisches Haushaltsgerät nach einem der Ansprüche 9 bis 11, **dadurch gekennzeichnet, dass** die Befestigungsmittel (17, 17') der Kappe (16, 16') auf dem Haltering Arbeitszubehör (5) und /oder auf dem Haltering (20, 20') aus einer der folgenden Kategorien ausgewählt sind: Befestigungsmitte durch Einrasten, Befestigungsmittel durch Verschrauben, Befestigungsmittel mit Bajonettverschluss.

13. Elektrisches Haushaltsgerätnach einem der Ansprüche 9 bis 12, **dadurch gekennzeichnet, dass** die Schneidwerkzeuge (8, 8a, 8b, 8c, 8d, 8e) einen Körper (81) von kegelstumpfartiger Form aufweisen, und dass das Lager (7) des Arbeitszubehörs (5) eine Lagerung (71) für die Aufnahme und Montage von komplementärer Form zu jener der Schneidwerkzeuge (8, 8a, 8b, 8c, 8d, 8e) definiert.

14. Elektrisches Haushaltsgerät nach einem der Ansprüche 9 bis 13, **dadurch gekennzeichnet, dass** das Arbeitszubehör (5) von der Antriebsbasis (2) abnehmbar ist, wobei die Antriebsbasis (2) und das Arbeitszubehör (5) jeweils zueinander komplementäre Befestigungsmittel umfassen.

15. Elektrisches Haushaltsgerät nach einem der Ansprüche 9 bis 14, **dadurch gekennzeichnet, dass** die Verriegelungskappe (16) Klauen (161), die dazu vorgesehen sind, in einen vorderen Rand (72) des Lagers (7) einzugreifen, und/oder Befestigungsmittel (23) an der äußeren Wand des Halteringes (20) aufweist.

## Claims

1. Mechanism (19, 19') for storing nesting cutting tools (8, 8a, 8b, 8c, 8d, 8e), containing hood (16, 16') to house and at least partially cover at least some of said cutting tools (8, 8a, 8b, 8c, 8d, 8e) nested within one another; hood (16, 16') includes locking mechanisms (17, 17') on household electrical appliance (1) for preparing food, **characterized in that** it contains securing ring (20, 20') for cutting tools (8, 8a, 8b, 8c, 8d, 8e) nested in hood (16, 16'), with locking mechanisms (17, 17') for hood (16, 16') designed to come into contact with additional locking mechanisms (23, 23') of said securing ring (20, 20') which also contains at least one locking stop (24, 24') for said nested cutting tools (8, 8a, 8b, 8c, 8d, 8e) relative to said ring which holds said tools at least partially inside the hood.

2. Storage mechanism (19, 19') based on Claim 1, wherein securing ring (20, 20') contains ring-shaped body (21) the external wall of which consists of said locking mechanisms (23, 23') in addition to locking mechanisms (17, 17') of hood (16, 16') and on the internal wall is at least one locking stop (24) for cutting tools.

3. Storage mechanism (19) based on Claim 1 or 2, wherein locking mechanisms (17, 17') of hood (16, 16') on securing ring (20, 20') are selected from one of the following categories: clip-on, screwed or socketed locking mechanisms.

4. Storage mechanism based on one of Claims 1 to 3, wherein the locking mechanisms of securing ring (20, 20') of the storage mechanism of the invention include at least one continuous strip (23, 23') protruding onto the external wall of securing ring (20, 20') or multiple sections protruding spread uniformly on the external wall.

5. Storage mechanism based on one of Claims 1 to 4, wherein said securing ring (20, 20') of the storage mechanism also contains attachment elements (26, 26') on household electrical appliance (1) for preparing food.

6. Storage mechanism (19, 19') based on one of Claims 1 to 5, wherein hood (16, 16') is shaped to fit the contours of cutting tools (8, 8a, 8b, 8c, 8d, 8e) stacked within one another.

7. Storage mechanism (19, 19') based on one of Claims 1 to 6, wherein cutting tools (8, 8a, 8b, 8c, 8d, 8e) are identical in size.

8. Storage mechanism based on one of Claims 1 to 7, wherein hood (16) has at least one opening (163) through which at least some of cutting tools (8, 8a, 8b, 8c, 8d, 8e) housed in locking hood (16) in place on accessory (5) can be seen.

9. Household electrical appliance (1) for preparing food with motorized base (2) consisting of case (3) enclosing electrical motor and electrical controls (4) for said motor, accessory (5) which is an integral part of the motorized base which contains storage compartment (7, 7') for holding cutting tools (8, 8a, 8b, 8c, 8d, 8e), wherein the set of said cutting tools (8, 8a, 8b, 8c, 8d, 8e) is shaped to allow them to nest within one another in order to be stacked in storage compartment (7, 7') of the accessory, connecting and drive mechanisms to rotate said cutting tools mounted in the accessory storage compartment, locking hood (16, 16') for said cutting tools stacked within one another in the accessory storage compartment which also contains storage mechanism (19, 19') for nesting cutting tools based on Claim 1, where said storage mechanism contains locking hood (16, 16') which mates with securing ring (20, 20') for the cutting tools nested within one another.

10. Household electrical appliance based on Claim 9, wherein securing ring (20, 20') of storage mechanism (19, 19') contains mechanisms (26, 26') to fix the storage mechanism on the household electrical cooking appliance, in particular, on accessory (5) of said device.

11. Household electrical appliance(1) for preparing food with motorized base (2) consisting of case (3) enclosing electrical motor and electrical controls (4) for said motor, accessory (5) which is an integral part of the motorized base which contains storage compartment (7, 7') for holding cutting tools (8, 8a, 8b, 8c, 8d, 8e), wherein the set of said cutting tools (8, 8a, 8b, 8c, 8d, 8e) is shaped to allow them to nest within one another in order to be stacked in storage compartment (7, 7') of the accessory, connecting and drive mechanisms to rotate said cutting tools mounted in the accessory storage compartment, locking hood (16, 16') for said cutting tools stacked within one another which also contains storage mechanism (19, 19') for nesting cutting tools based on Claim 1, where said storage mechanism contains locking hood (16, 16') which mates with securing ring (20, 20') for the cutting tools nested within one another.

12. Household electrical appliance based on one of Claims 9 to 11, wherein locking mechanism (17, 17') of locking hood (16, 16') on accessory (5) and/or on securing ring (20, 20') is selected from one of the following categories: clipping, screwing or socket attachment mechanism.

13. Household electrical appliance based on one of Claims 9 to 12, wherein body (81) of cutting tools (8, 8a, 8b, 8c, 8d, 8e) is shaped like a truncated cone and where storage compartment (7) of accessory (5) creates reception and storage housing (71) in a shape which is complementary to that of said cutting tools (8, 8a, 8b, 8c, 8d, 8e).

14. Household electrical appliance based on one of Claims 9 to 13, wherein accessory (5) is removable from motorized base (2) and where said motorized base (2) and said accessory (5) each contain additional attachment mechanisms to be attached to one another.

15. Household electrical appliance based on one of Claims 9 to 14, wherein locking hood (16) has fasteners (161) designed to come into contact with anterior edge (72) of storage compartment (7) and/or of locking mechanisms (23) on the external wall of securing ring (20).
